# EUROPEAN PATENT SPECIFICATION

(11) **EP 0 361 623 B1**
(45) Date of publication and mention of the grant of the patent: **29.05.1996**
(21) Application number: 89202455.5
(22) Date of filing: 28.09.1989
(51) Int. Cl.: C08G 67/02

(54) **Process for the preparation of polymers**
Verfahren zur Herstellung von Polymern
Procédé de préparation de polymères

(30) Priority: 29.09.1988 NL 8802391
(43) Date of publication of application: 04.04.1990
(73) Proprietor: SHELL INTERNATIONALE RESEARCH MAATSCHAPPIJ B.V., NL-2596 HR Den Haag (NL)
(72) Inventor: Wong, Pui Kwan, NL-1031 CM Amsterdam (NL)

(56) References cited:
- EP-A- 0 246 674
- EP-A- 0 307 027
- EP-A- 0 313 151
- EP-A- 0 317 003
- US-A- 3 689 460
- US-A- 3 694 412

## Description

The invention relates to a process for the preparation of polymers of carbon monoxide with one or more olefinically unsaturated compounds.

Linear polymers of carbon monoxide with one or more olefinically unsaturated compounds (for the sake of brevity referred to as A), in which polymers the monomer units -(CO)- on the one hand, and the units -A'- derived from the monomers A used on the other hand, occur in alternating order, can be prepared by contacting the monomers at an elevated temperature and pressure and in the presence of a protic, polar diluent in which the polymers are insoluble or virtually insoluble, with a solution of a catalyst composition on the basis of:
a) a palladium compound,
b) an anion of an acid with a pKa of less than 4, and
c) a bisphosphine of the general formula (R¹)₂P-R-P(R¹)₂ wherein R¹ represents an optionally polar-substituted aromatic hydrocarbyl group and R is a bivalent organic bridging group containing at least two carbon atoms in the bridge.

Such a process has been disclosed in EP-A-246 674. This document is in particular concerned with the preparation of carbon monoxide/ethene copolymers having a high molecular weight by applying in the polymerisation an overall pressure in the range of from 75 to 250 bar and an ethene/carbon monoxide partial pressure ratio in the range of from 0.75 to 3.

As a rule, polymerization is carried out by introducing a catalyst solution into a reactor which contains the monomers and the diluent and which is at the desired temperature and pressure. During polymerization, the polymers are obtained in the form of a suspension in the diluent. After the required degree of polymerization is attained, polymerization is terminated, generally by cooling to room temperature and releasing the pressure.

For the protic polar diluent to be used in the polymerization, preference is given to lower aliphatic alcohols, such as methanol, for it has been found that in these, the above-mentioned catalysts display the highest polymerization rate. Aprotic polar liquids, such as acetone and tetrahydrofuran, were thus far hardly considered for the purpose, in view of the poor polymerization rates the catalysts displayed in these liquids.

The Applicant has carried out an investigation into diluents that may possibly be used in the above-mentioned polymerization. It was found that the polymerization rates of the catalysts in aprotic polar liquids can be much enhanced by adding water to the liquids. Depending on the chosen mixing ratio between the aprotic polar liquid and the water, the polymerization rates achieved may be equal to those obtained with methanol or even higher. This find is surprising, since during earlier research into this method of preparing these polymers, it had been established that the addition of water when carrying out the polymerization in methanol as diluent had not the slightest influence on polymerization rates.

The present patent application therefore relates to a process for the preparation of polymers of carbon monoxide with one or more olefinically unsaturated compounds characterized in that the monomers are contacted at an elevated temperature and pressure and in the presence of a diluent made up of a mixture of water and one or more aprotic polar liquids in which the polymers are insoluble or virtually insoluble, with a solution of a catalyst composition on the basis of components a), b) and c).

As aprotic polar liquids that may be used in the process of the invention as component of the diluent, may be mentioned, inter alia, aliphatic ketones, such as acetone and methyl ethyl ketone, aliphatic carboxylic acid esters, such as methyl acetate, ethyl acetate and methyl propionate, cyclic ethers, such as tetrahydrofuran and dioxane, alkyl ethers of glycols, such as the dimethyl ether of diethylene glycol, lactones, such as gamma-butyrolactone, lactams, such as N-methylpyrrolidone and cyclic sulphones, such as sulpholane. Very good results have been obtained when using diluents containing acetone or tetrahydrofuran as aprotic polar liquid. The mixing ratio of the aprotic polar liquids to water in the diluent to be used may vary within wide ranges. The polymerization rates that are observed both when carrying out the polymerization by using a diluent containing only a small amount of water, such as 2 %vol., and when carrying out the polymerization by using a diluent containing a very large amount of water, such as 50 %vol., are considerably higher than when carrying out a comparable polymerization by using a diluent which consists exclusively of the aprotic polar liquids involved. In the process of the invention, diluents containing less than 50 %vol. water are generally used. Preference is given to diluents containing from 1 to 25 %vol. and in particular from 5 to 15 %vol. water.

In the catalyst composition used in the preparation of the polymers of the invention, component a) is preferably a palladium salt of a carboxylic acid, and palladium acetate in particular. As component b), the catalyst composition preferably contains an anion of an acid with a pKa of less than 2, in particular para-toluenesulphonic acid. In the catalyst composition, component b) is preferably present in a quantity of from 0.5 to 50 and in particular of from 1 to 25 mol per mol of palladium. Component b) may be incorported in the catalyst composition in the form of an acid and/or in the form of a salt. If a salt is used as component b), preference is given to a cupric salt.

In the catalyst composition used in the preparation of the polymers of the invention, group R¹ which is present in component c) is preferably a phenyl group containing at least one methoxy substituent in a position ortho in respect to the phosphorus atom to which the phenyl group is bound and the bridging group R preferably contains three atoms in the bridge, at least two of which are carbon atoms. Examples of suitable bridging groups R are the -CH₂-CH₂-CH₂- group, the -CH₂-C(CH₃)₂-CH₂ group and the -CH₂-Si(CH₃)₂-CH₂- group. Diphosphines that can be very suitably used as components c) in the catalyst compositions are 1,3-bis[di(2-methoxyphenyl)phosphino]propane, 1,3-bis[di(2,4-dimethoxyphenyl)phosphino]propane, 1,3-bis[di(2,6-dimethoxyphenyl)phosphino]propane, and 1,3-bis[di(2,4,6-trimethoxyphenyl)phosphino]propane.

In the preparation of the polymers of the invention, preference is given to the use of a catalyst composition comprising 1,3-bis[di(2-methoxyphenyl)phosphino]propane as component c). In the catalyst compositions, the bisphosphines are preferably used in a quantity of from 0.5 to 2 and in particular of from 0.75 to 1.5 mol per mol of palladium.

In order to enhance the activity of the catalyst compositions that are used in the preparation of the polymers of the invention, a 1,4-quinone may be incorporated as component d). For this purpose, 1,4-benzoquinone and 1,4-naphthoquinone are very suitable. The quantity of 1,4-quinone used is preferably from 5 to 5000 mol and in particular from 10 to 1000 mol per mol of palladium.

The solvent used for the catalyst composition is preferably the same aprotic polar liquid that is also used in the diluent.

Olefinically unsaturated compounds that can be suitably polymerized with carbon monoxide according to the invention are both compounds consisting exclusively of carbon and hydrogen and compounds which, in addition to carbon and hydrogen, contain one or more hetero-atoms. The process of the invention is preferably applied for the preparation of polymers of carbon monoxide with one or more olefinically unsaturated hydrocarbons. Examples of suitable hydrocarbon monomers are ethene and other a-olefins, such as propene, butene-1, hexene-1 and octene-1. The process of the invention is in particular very suitable for application in the preparation of copolymers of carbon monoxide with ethene and for the preparation of terpolymers of carbon monoxide with ethene and another alpha-olefin, in particular propene.

The quantity of catalyst composition employed in the preparation of the polymers may vary within wide limits. The quantity of catalyst used per mol of olefinically unsaturated compound to be polymerized preferably contains 10⁻⁷-10⁻³ and in particular 10⁻⁶-10⁻⁴ mol of palladium.

The preparation of the polymers is preferably carried out at a temperature of 40-120°C and a pressure of 20-150 bar and in particular at a temperature of 50-100°C and a pressure of 30-100 bar. The molar ratio of olefinically unsaturated compounds relative to carbon monoxide in the mixture to be polymerized is preferably 10:1-1:5 and in particular 5:1-1:2. The process of the invention may be carried out batch-wise or continuously.

The invention will now be illustrated with the aid of the following examples.

### Example 1

A carbon monoxide/ethene copolymer was prepared as follows. A mechanically stirred autoclave with a capacity of 300 ml was charged with 200 ml of methanol. After the contents of the autoclave were brought to 90°C, a 1:1 carbon monoxide/ethene mixture was blown in until a pressure of 55 bar was reached. Subsequently, a catalyst solution was introduced into the autoclave which was based upon:
30 ml methanol,
5 ml methyl ethyl ketone,
0.019 mmol palladium acetate,
0.038 mmol para-toluenesulphonic acid, and
0.019 mmol 1,3-bis[di(2-methoxyphenyl)phosphino]propane.

During polymerization, the pressure was maintained by the introduction of a 1:1 carbon monoxide/ethene mixture. Polymerization was terminated after 3.07 hours by cooling the reaction mixture to room temperature and releasing the pressure. The copolymer was filtered off, washed with methanol and dried at 70°C.

23.5 g copolymer was obtained. The polymerization rate was 2.9 kg copolymer/g palladium.hour.

### Example 2

A carbon monoxide/ethene copolymer was prepared substantially in the same way as in Example 1, but with the following differences
a) 200 ml of tetrahydrofuran instead of methanol was introduced into the autoclave,
b) the catalyst solution used was based upon
   31 ml tetrahydrofuran,
   0.01 mmol palladium acetate,
   0.022 mmol para-toluenesulphonic acid, and
   0.012 mmol 1,3-bis[di(2-methoxyphenyl)phosphino]propane,
c) the reaction time was 19.2 hours, and
d) the copolymer was washed with tetrahydrofuran instead of methanol.

4.54 g copolymer was obtained. The polymerization rate was 0.22 kg copolymer/g palladium.hour.

### Example 3

A carbon monoxide/ethene copolymer was prepared substantially in the same way as in Example 1, but with the following differences
a) 200 ml of acetone instead of methanol was introduced into the autoclave,
b) the catalyst solution used was based upon 31 ml acetone,
   0.01 mmol palladium acetate,
   0.022 mmol para-toluenesulphonic acid, and
   0.012 mmol 1,3-bis[di(2-methoxyphenyl)phosphino]propane,
c) the reaction time was 4.67 hours, and
d) the copolymer was washed with acetone instead of methanol.

6.45 g copolymer was obtained. The polymerization rate was 1.3 kg copolymer/g palladium.hour.

### Example 4

A carbon monoxide/ethene copolymer was prepared substantially in the same way as in Example 1, but with the following differences
a) 200 ml tetrahydrofuran and 5 ml water were introduced into the autoclave instead of methanol,
b) the catalyst solution used was based upon 46 ml tetrahydrofuran,
   0.01 mmol palladium acetate,
   0.022 mmol para-toluenesulphonic acid, and
   0.012 mmol 1,3-bis[di(2-methoxyphenyl)phosphino]propane,
c) the reaction time was 18.97 hours, and
d) the copolymer was washed with tetrahydrofuran instead of methanol.

16.5 g copolymer was obtained. The polymerization rate was 0.82 kg copolymer/g palladium.hour.

### Example 5

A carbon monoxide/ethene copolymer was prepared substantially in the same way as in Example 1, but with the following differences
a) 200 ml tetrahydrofuran and 10 ml water were introduced into the autoclave instead of methanol,
b) the catalyst solution used was based upon 26 ml tetrahydrofuran,
   0.01 mmol palladium acetate,
   0.022 mmol para-toluenesulphonic acid, and
   0.012 mmol 1,3-bis[di(2-methoxyphenyl)phosphino]propane,
c) the reaction time was 3.53 hours, and
d) the copolymer was washed with tetrahydrofuran instead of methanol.

12.3 g copolymer was obtained. The polymerization rate was 3.3 kg copolymer/g palladium.hour.

### Example 6

A carbon monoxide/ethene copolymer was prepared substantially in the same way as in Example 1, but with the following differences
a) 177 ml tetrahydrofuran and 23 ml water were introduced into the autoclave instead of methanol,
b) the catalyst solution used was based upon 30 ml tetrahydrofuran,
   0.01 mmol palladium acetate,
   0.024 mmol para-toluenesulphonic acid, and
   0.012 mmol 1,3-bis[di(2-methoxyphenyl)phosphino]propane,
c) the reaction time was 4.57 hours, and
d) the copolymer was washed with tetrahydrofuran instead of methanol.

23.07 g copolymer was obtained. The polymerization rate was 4.7 kg copolymer/g palladium.hour.

### Example 7

A carbon monoxide/ethene copolymer was prepared substantially in the same way as in Example 1, but with the following differences
a) 85 ml tetrahydrofuran and 115 ml water were introduced into the autoclave instead of methanol,
b) the catalyst solution used was based upon 30 ml tetrahydrofuran,
   0.01 mmol palladium acetate,
   0.024 mmol para-toluenesulphonic acid, and
   0.012 mmol 1,3-bis[di(2-methoxyphenyl)phosphino]propane,
c) the reaction time was 19.42 hours, and
d) the copolymer was washed with tetrahydrofuran instead of methanol.

23.97 g copolymer was obtained. The polymerization rate was 1.2 kg copolymer/g palladium.hour.

### Example 8

A carbon monoxide/ethene copolymer was prepared substantially in the same way as in Example 1, but with the following differences
a) 177 ml acetone and 23 ml water were introduced into the autoclave instead of methanol,
b) the catalyst solution used was based upon 30 ml acetone,
   0.01 mmol palladium acetate,
   0.024 mmol para-toluenesulphonic acid, and
   0.012 mmol 1,3-bis[di(2-methoxyphenyl)phosphino]propane,
c) the reaction time was 3.23 hours, and
d) the copolymer was washed with acetone instead of methanol.

9.97 g copolymer was obtained. The polymerization rate was 2.9 kg copolymer/g palladium.hour.

Of Examples 1-8, Examples 4-8 are examples in accordance with the invention. In these examples, polymerization was carried out by using a mixture of an aprotic polar liquid and water. Examples 1-3 fall outside the scope of the invention. They have been included in the patent application for comparison. Example 1 describes a conventional polymerization reaction using methanol as diluent. In Examples 2 and 3, polymerization was carried out in a diluent consisting 100% of an aprotic polar liquid. The influence which taking up water in the aprotic polar liquid has on polymerization rates is demonstrated by the comparison of Examples 4-7 with Example 2 and by the comparison of Example 8 with Example 3. As will be seen from these examples, both the use of a tetrahydrofuran/water mixture containing only 2 %vol. of water (Example 4) and the use of such a mixture containing 50 %vol. of water (Example 7) lead to a considerably higher polymerization rate than when tetrahydrofuran is used as such (Example 2). Examples 5 and 6, in which the tetrahydrofuran/water mixtures used contained 4 and 10% of water, respectively, show that in this way polymerization rates can be achieved which are even higher than those obtained when using methanol. In Example 8, in which an acetone/water mixture containing 10 %vol. of water was used, the polymerization rate achieved corresponded with that obtained in methanol.

With the aid of ¹³C-NMR analysis it was established that the polymers prepared by Examples 1-8 had a linear structure and were made up of units of the formula -(CO)-(C₂H₄)-.

## Claims

1. Process for the preparation of polymers of carbon monoxide with one or more olefinically unsaturated compounds characterized in that the monomers are contacted at an elevated temperature and pressure and in the presence of a diluent made up of a mixture of water and one or more aprotic polar liquids in which the polymers are insoluble to the degree that the polymers are obtained in the form of a suspension, with a solution of a catalyst composition on the basis of:
a) a palladium compound,
b) an anion of an acid with a pka of less than 4, and
c) a bisphosphine of the general formula (R¹)₂P-R-P(R¹)₂, wherein R¹ represents an optionally polar-substituted aromatic hydrocarbyl group and R is a bivalent organic bridging group containing at least two carbon atoms in the bridge.

2. Process as claimed in claim 1, characterized in that the diluent contains acetone or tetrahydrofuran as aprotic polar liquid.

3. Process as claimed in claim 1 or 2, characterized in that the diluent contains less than 50 %vol. of water.

4. Process as claimed in claim 3, characterized in that the diluent contains 1 to 25 %vol. of water.

5. Process as claimed in claim 4, characterized in that the diluent contains 5 to 15 %vol. of water.

6. Process as claimed in one or more of claims 1-5, characterized in that the catalyst composition is based on a palladium salt of a carboxylic acid as component a), an anion of an acid with a pKa of less than 2, in a quantity of from 0.5 to 50 mol per mol of palladium as component b) and a bisphosphine in which group R¹ represents a phenyl group containing at least one methoxy substituent in a position ortho in respect to the phosphorus atom to which the phenyl group is bound and in which the bridging group R contains three atoms in the bridge, at least two of which are carbon atoms, in a quantity of from 0.5 to 2 mol of bisphosphine per mol of palladium, as component c).

7. Process as claimed in one or more of claims 1-6, characterized in that the same aprotic polar liquid as is used in the diluent is employed as solvent for the catalyst composition.

8. Process as claimed in one or more of claims 1-7, characterized in that it is carried out at a temperature of from 40 to 120°C, a pressure of from 20 to 150 bar and a molar ratio of the olefinically unsaturated compounds relative to carbon monoxide in the mixture to be polymerized of from 10:1 to 1:5 and by using a quantity of catalyst which, per mol of olefinically unsaturated compound to be polymerized, contains 10⁻⁷ to 10⁻³ mol of palladium.

## Patentansprüche

1. Verfahren zur Herstellung von Polymeren aus Kohlenmonoxid und einer oder mehreren olefinisch ungesättigten Verbindungen, dadurch gekennzeichnet, daß die Monomere mit einer Lösung einer Katalysatorzusammensetzung auf der Basis:
a) einer Palladiumverbindung,
b) des Anions einer Säure mit einem pK_{S}-Wert von weniger als 4 und
c) eines Bisphosphins der allgemeinen Formel (R¹)₂P-R-P(R¹)₂, worin R¹ eine gegebenenfalls polar substituierte aromatische Kohlenwasserstoffgruppe und R eine zweiwertige organische Brückengruppe mit mindestens zwei Kohlenstoffatomen in der Brücke bedeuten, bei erhöhter Temperatur und erhöhtem Druck und in Gegenwart eines Verdünnungsmittels, das aus einer Mischung aus Wasser und einer oder mehreren aprotischen polaren Flüssigkeiten, in denen die Polymere unlöslich sind, so daß man sie in Form einer Suspension erhält, kontaktiert werden.

2. Verfahren nach Anspruch 1, dadurch gekennzeichnet, daß das Verdünnungsmittel als aprotische polare Flüssigkeit Aceton oder Tetrahydrofuran enthält.

3. Verfahren nach Anspruch 1 oder 2, dadurch gekennzeichnet, daß das Verdünnungsmittel weniger als 50 Vol.-% Wasser enthält.

4. Verfahren nach Anspruch 3, dadurch gekennzeichnet, daß das Verdünnungsmittel 1 bis 25 Vol.-% Wasser enthält.

5. Verfahren nach Anspruch 4, dadurch gekennzeichnet, daß das Verdünnungsmittel 5 bis 15 Vol.-% Wasser enthält.

6. Verfahren nach einem oder mehreren der Ansprüche 1-5, dadurch gekennzeichnet, daß die Katalysatorzusammensetzung auf dem Palladiumsalz einer Carbonsäure als Komponente a), dem Anion einer Säure mit einem pK_{S}-Wert von weniger als 2 in einer Menge von 0,5 bis 50 Mol pro Mol Palladium als Komponente b) und einem Bisphosphin, worin die Gruppe R¹ eine Phenylgruppe mit mindestens einem Methoxysubstituenten in ortho-Stellung zum Phosphoratom, an das die Phenylgruppe gebunden ist, darstellt, und worin die Brückengruppe R drei Atome in der Brücke aufweist, von denen mindestens zwei Kohlenstoffatome sind, in einer Menge von 0,5 bis 2 Mol Bisphosphin pro Mol Palladium als Komponente c) basiert.

7. Verfahren nach einem oder mehreren der Ansprüche 1-6, dadurch gekennzeichnet, daß als Lösungsmittel für die Katalysatorzusammensetzung die gleiche aprotische polare Flüssigkeit zum Einsatz kommt, die im Verdünnungsmittel verwendet wird.

8. Verfahren nach einem oder mehreren der Ansprüche 1-7, dadurch gekennzeichnet, daß es bei einer Temperatur von 40 bis 120°C, einem Druck von 20 bis 150 bar und einem Molverhältnis von olefinisch ungesättigten Verbindungen zu Kohlenmonoxid in der zu polymerisierenden Mischung von 10:1 bis 1:5 und unter Verwendung solch einer Katalysatormenge durchgeführt wird, daß pro Mol zu polymerisierender olefinisch ungesättigter Verbindung 10⁻⁷ bis 10⁻³ Mol Palladium vorliegen.

## Revendications

1. Procédé pour la préparation de polymères de monoxyde de carbone avec un ou plusieurs composés oléfiniquement insaturés caractérisé en ce que l'on met en contact les monomères à une température et une pression élevées et en présence d'un diluant fait d'un mélange d'eau et d'un ou plusieurs liquides polaires aprotiques dans lesquels les polymères sont insolubles, à un degré tel qu'ils sont obtenus sous la forme d'une suspension, avec une solution de composition catalytique sur la base de:
a) un composé palladium,
b) un anion d'un acide avec un pKa inférieur à 4, et
c) une bisphosphine de formule générale (R¹)₂P-R-P(R¹)₂ dans laquelle R¹ représente un groupe hydrocarbyle aromatique substitué éventuellement polaire et R est un groupe de pontage organique bivalent contenant au moins deux atomes de carbone dans le pont.

2. Procédé selon la revendication 1, caractérisé en ce que le diluant contient de l'acétone ou du tétrahydrofuranne en tant que liquide polaire aprotique.

3. Procédé selon la revendication 1 ou 2, caractérisé en ce que le diluant contient moins de 50% en volume d'eau.

4. Procédé selon la revendication 3, caractérisé en ce que le diluant contient de 1 à 25% en volume d'eau.

5. Procédé selon la revendication 4, caractérisé en ce que le diluant contient de 5 à 15% en volume d'eau.

6. Procédé selon l'une ou plusieurs des revendications 1 à 5, caractérisé en ce que la composition catalytique est basée sur un sel du palladium d'un acide carboxylique en tant que composant a), un anion d'un acide avec un pKa inférieur à 2, à raison de 0,5 à 50 moles par mole de palladium en tant que composant b) et une bisphosphine dans laquelle le groupe R¹ représente un groupe phényle contenant au moins un substituant méthoxy en position ortho par rapport à l'atome de phosphore auquel le groupe phényle est lié et dans laquelle le groupe R de pontage contient trois atomes de carbone dans le pont, au moins deux de ceux-ci sont des atomes de carbone, en une quantité de 0,5 à 0,2 mole de bisphophine par mole de palladium, en tant que composant c).

7. Procédé selon l'une ou plusieurs des revendications 1 à 6, caractérisé en ce que le même liquide polaire aprotique que l'on utilise dans le diluant est employé en tant que solvant dans la composition catalytique.

8. Procédé selon l'une ou plusieurs des revendications 1 à 7, caractérisé en ce qu'il est réalisé à une température de 40 à 120°C, une pression de 20 à 150 bar et un rapport molaire des composés oléfiniquement insaturés au monoxyde de carbone dans le mélange à polymériser de 10:1 à 1:5 et en utilisant une quantité de catalyseur qui, par mole de composé oléfiniquement insaturé à polymériser, contient de 10⁻⁷ à 10⁻³ mole de palladium.
